# FASCICULE DE BREVET EUROPEEN

(11) **EP 2 438 100 B1**
(45) Date de publication et mention de la délivrance du brevet: **13.08.2014**
(21) Numéro de dépôt: 10724442.8
(22) Date de dépôt: 01.06.2010
(51) Int. Cl.: C08F 297/00, C08L 53/00, B60C 1/00, B60C 19/12

(54) **COMPOSITION ELASTOMERE A BASE D'UN COPOLYMERE THERMOPLASTIQUE, OBJET PNEUMATIQUE POURVU D'UNE COUCHE ETANCHE AUX GAZ CONSTITUEE D'UNE TELLE COMPOSITION**
ELASTOMERZUSAMMENSETZUNG AUS EINEM THERMOPLASTISCHEN COPOLYMER, AUFBLASBARER GEGENSTAND MIT EINER GASBARRIERE AUS EINER DERARTIGEN ZUSAMMENSETZUNG
ELASTOMER COMPOSITION MADE FROM A THERMOPLASTIC COPOLYMER, INFLATABLE OBJECT PROVIDED WITH A GAS BARRIER MADE FROM SUCH A COMPOSITION

(30) Priorité: 02.06.2009 FR 0902651
(43) Date de publication de la demande: 11.04.2012
(73) Titulaire: COMPAGNIE GENERALE DES ETABLISSEMENTS MICHELIN, 63000 Clermont-Ferrand (FR); MICHELIN Recherche et Technique S.A., 1763 Granges-Paccot (CH)
(72) Inventeur: ABAD, Vincent, F-63400 Chamalieres (FR); GREIVELDINGER, Marc, F-63140 Chatel Guyon (FR); THUILLIEZ, Julien, F-63040 Clermont-Ferrand Cedex 9 (FR)
(74) Mandataire: Le Cam, Véronique Marie Christine
(86) Numéro de dépôt international: PCT/EP2010/057659
(87) Numéro de publication internationale: WO 2010/139700

(56) Documents cités:
- EP-A1- 0 509 357
- EP-A1- 1 816 086
- FR-A1- 2 916 680
- US-A1- 2003 204 022
- US-A1- 2005 176 903
- FODOR ZS ET AL: "POLYISOBUTYLENE-CONTAINING BLOCK POLYMERS BY SEQUENTIAL MONOMER ADDITION. \IX. POLY(ACENAPHTHYLENE-B-ISOBUTYLENE-B-ACENAP HTHYLENE)" POLYMER BULLETIN, SPRINGER, HEIDELBERG, DE LNKD- DOI:10.1007/BF01041157, vol. 29, no. 6, 1 décembre 1992 (1992-12-01), pages 697-704, XP000324326 ISSN: 0170-0839 cité dans la demande
- JUDIT E. PUSKAS , LUCAS M. DOS SANTOS , GABOR KASZAS , KEVIN KULBABA: "Novel thermoplastic elastomers based on arborescent (dendritic) polyisobutylene with short copolymer end sequences" JOURNAL OF POLYMER SCIENCE: PART A: POLYMER CHEMISTRY, vol. 47, 8 janvier 2009 (2009-01-08), pages 1148-1158, XP002555122 DOI: 10.1002/pola23218

## Description

La présente invention est relative à une composition élastomère comprenant un élastomère thermoplastique de type copolymère à blocs comprenant un bloc élastomérique composé d'un « polyisobutylène » et un ou plusieurs blocs thermoplastiques.

Plus particulièrement, l'invention porte sur ce type de compositions utilisables comme couches étanches aux gaz assurant l'étanchéité d'objets pneumatiques, c'est-à-dire, par définition, aux objets qui prennent leur forme utilisable quand on les gonfle d'air ou d'un gaz de gonflage équivalent. En particulier, ces objets pneumatiques sont des bandages pneumatiques.

Dans un bandage pneumatique conventionnel du type "tubeless" (c'est-à-dire sans chambre à air), la face radialement interne comporte une couche étanche à l'air (ou plus généralement à tout gaz de gonflage) qui permet le gonflement et le maintien sous pression du bandage pneumatique. Ses propriétés d'étanchéité lui permettent de garantir un taux de perte de pression relativement faible, permettant de maintenir le bandage gonflé en état de fonctionnement normal pendant une durée suffisante, normalement de plusieurs semaines ou plusieurs mois. Elle a également pour fonction de protéger l'armature de carcasse de la diffusion d'air provenant de l'espace intérieur au bandage.

Cette fonction de couche interne ou "gomme intérieure" ("inner liner") étanche est aujourd'hui remplie par des compositions à base de caoutchouc butyl (copolymère d'isobutylène et d'isoprène), reconnues depuis fort longtemps pour leurs excellentes propriétés d'étanchéité.

Toutefois, un inconvénient bien connu des compositions à base de caoutchouc ou élastomère butyl est qu'elles présentent des pertes hystérétiques importantes, qui plus est sur un spectre large de température, inconvénient qui pénalise la résistance au roulement des bandages pneumatiques.

Diminuer l'hystérèse de ces couches internes d'étanchéité et donc in fine la consommation de carburant des véhicules automobiles, est un objectif général auquel se heurte la technologie actuelle.

Dans les demandes de brevet antérieures FR 2938543 et FR 2938546, les Demanderesses décrivent un nouvel élastomère thermoplastique de type SIBS. Ce nouvel SIBS, lorsqu'il est utilisé en composition éventuellement étendu avec une huile d'extension, induit à ladite composition des propriétés dynamiques surprenantes et inattendues, qui rendent cette composition particulièrement adaptée pour la fabrication de couches internes d'étanchéité, notamment pour pneumatiques de véhicules automobiles. Avantageusement, ce SIBS permet l'obtention de couches internes d'étanchéité présentant des propriétés d'hystérèse améliorées tout en offrant à ces dites couches internes de très bonnes propriétés d'étanchéité et une capacité d'adhésion aux composants en caoutchouc qui lui sont adjacents.

Par ailleurs, FR 2916680 enseigne l'obtention d'un gain en hystérèse par l'utilisation d'une couche élastomère comportant au moins un TPE à blocs polystyrène et polyisobutylène et une huile polyisobutène, en comparaison à une gomme interne traditionnellement utilisée en pneumatique et formée de caoutchouc butyl et de charge, et ceci sans altérer notablement l'étanchéité.

Outre les propriétés d'hystérèse améliorées, l'amélioration de la tenue thermique de compositions pour couches internes d'étanchéité constitue un axe de recherche continu en vue notamment d'assurer une bonne cohésion de la composition à chaud, même lors de conditions d'utilisation extrêmes telles que par exemple le roulage à très haute vitesse ou dans un environnement dont la température ambiante est élevée ou encore lors de la cuisson des pneumatiques pendant laquelle les températures peuvent atteindre plus de 200°C.

La tenue thermique d'un élastomère thermoplastique à blocs est fonction de la valeur de la température de transition vitreuse et/ou de la température de fusion des blocs thermoplastiques. Pour certaines applications, la valeur de la température de transition vitreuse des blocs latéraux de certains SIBS est insuffisante et ne permet pas d'envisager l'utilisation de ces SIBS pour l'obtention de couches internes d'étanchéité soumises notamment à des conditions extrêmes d'utilisation.

Le but de la présente invention est donc d'améliorer la tenue thermique de compositions à base d'élastomère thermoplastique, tout en maintenant de bonnes propriétés d'étanchéité, ainsi que des propriétés d'hystérèse satisfaisantes pour une utilisation en pneumatique.

Les Inventeurs, poursuivant leurs recherches, ont découvert que l'utilisation de certains élastomères thermoplastiques à blocs dans des compositions élastomères confère à ces compositions une bonne cohésion à chaud, notamment à des températures supérieures à 100°C, voire supérieures à 150°C. En outre, ces élastomères thermoplastiques spécifiques confèrent aux compositions les contenant de bonnes propriétés d'étanchéité ainsi que des propriétés d'hystérèse satisfaisantes pour une utilisation en pneumatique et notamment comme couche interne du pneumatique.

Ainsi, selon un premier objet, la présente invention concerne une composition élastomère comprenant au moins, à titre d'élastomère majoritaire, un élastomère thermoplastique à blocs de structure spécifique.

Un autre objet de l'invention est un objet pneumatique pourvu d'une couche élastomère étanche aux gaz de gonflage tels que l'air, ladite couche élastomère étant constituée de la composition élastomère comprenant au moins, à titre d'élastomère majoritaire, un élastomère thermoplastique à blocs de structure spécifique.

Comparativement aux caoutchoucs butyl, et tout comme les SIBS, cet élastomère thermoplastique de structure spécifique présente en outre l'avantage majeur, en raison de sa nature thermoplastique, de pouvoir être travaillé à l'état fondu (liquide), et par conséquent d'offrir une possibilité de mise en oeuvre simplifiée.

L'invention concerne particulièrement les objets pneumatiques en caoutchouc tels que des bandages pneumatiques, ou les chambres à air, notamment les chambres à air pour bandage pneumatique.

L'invention concerne plus particulièrement les bandages pneumatiques destinés à équiper des véhicules à moteur de type tourisme, SUV ("Sport Utility Vehicles"), deux roues (notamment motos), avions, comme des véhicules industriels choisis parmi camionnettes, "Poids-lourd" - c'est-à-dire métro, bus, engins de transport routier (camions, tracteurs, remorques), véhicules hors-la-route tels qu'engins agricoles ou de génie civil -, autres véhicules de transport ou de manutention.

L'invention concerne également un procédé pour étanchéifier un objet pneumatique vis-à-vis des gaz de gonflage, dans lequel on incorpore audit objet pneumatique lors de sa fabrication, ou on ajoute audit objet pneumatique après sa fabrication, une couche élastomère étanche aux gaz telle que mentionnée ci-dessus.

L'invention concerne également l'utilisation comme couche étanche aux gaz de gonflage, dans un objet pneumatique, d'une couche élastomère telle que mentionnée ci-dessus.

Dans la présente description, sauf indication expresse différente, tous les pourcentages (%) indiqués sont des % en masse.

Dans la description de l'invention qui suit les expressions "élastomère thermoplastique à blocs", "copolymère élastomérique thermoplastique à blocs " et "copolymère à blocs" sont équivalentes et pourront être utilisées indifféremment.

D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Ainsi, un premier objet de l'invention est une composition élastomère comprenant au moins, à titre d'élastomère majoritaire (en poids), un élastomère thermoplastique à blocs de structure spécifique.

Cet élastomère thermoplastique à blocs de structure spécifique est un copolymère à blocs comprenant au moins un bloc élastomérique « polyisobutylène » composé majoritairement du monomère isobutène polymérisé et, au moins à l'une des extrémités du bloc élastomérique, un bloc thermoplastique constitué d'au moins un monomère polymérisé, autre qu'un monomère styrénique ou indénique, la température de transition vitreuse (Tg, mesurée selon ASTM D3418) dudit polymère constituant le bloc thermoplastique est supérieure ou égale à 100°C. Ce copolymère élastomérique thermoplastique à blocs présente les caractéristiques structurelles suivantes:
1) le bloc « polyisobutylène » présente une masse moléculaire moyenne en nombre ("Mn") allant de 25 000 g/mol à 350 000g/mol et une température de transition vitreuse ("Tg") inférieure ou égale à -20°C,
2) le ou les bloc(s) thermoplastique(s) de température de transition vitreuse supérieure ("Tg") supérieure ou égale à 100°C et constitué d'au moins un monomère polymérisé, autre qu'un monomère styrénique ou indénique.

Selon une première variante de l'invention, le copolymère élastomérique thermoplastique à blocs se présente sous une forme linéaire dibloc. Le copolymère à blocs se compose alors d'un bloc « polyisobutylène » et d'un bloc thermoplastique.

Selon une variante particulièrement préférée de l'invention, le copolymère à blocs élastomérique thermoplastique se présente sous une forme linéaire tribloc. Le copolymère à blocs se compose alors d'un bloc « polyisobutylène » central et de deux blocs thermoplastiques terminaux, à chacune des deux extrémités du bloc « polyisobutylène ».

Selon une autre variante de l'invention, le copolymère à blocs élastomérique thermoplastique se présente sous une forme étoilée à au moins trois branches. Le copolymère à blocs se compose alors d'un bloc « polyisobutylène » étoilé à au moins trois branches et d'un bloc thermoplastique, situé à l'extrémité de chacune des branches du « polyisobutylène ». Le nombre de branches du « polyisobutylène » varie de 3 à 12, et de préférence de 3 à 6.

Selon une autre variante de l'invention, le copolymère à blocs élastomérique thermoplastique se présente sous une forme branchée ou dendrimère. Le copolymère à blocs se compose alors d'un bloc « polyisobutylène » branché ou dendrimère et d'un bloc thermoplastique, situé à l'extrémité des branches du « polyisobutylène » dendrimère.

La masse moléculaire moyenne en nombre (notée Mn) du copolymère à blocs est préférentiellement comprise entre 30 000 et 500 000 g/mol, plus préférentiellement comprise entre 40 000 et 400 000 g/mol. En dessous des minima indiqués, la cohésion entre les chaînes d'élastomère du TPE, notamment en raison de sa dilution éventuelle (en présence d'une huile d'extension), risque d'être affectée ; d'autre part, une augmentation de la température d'usage risque d'affecter les propriétés mécaniques, notamment les propriétés à la rupture, avec pour conséquence une performance diminuée "à chaud". Par ailleurs, une masse Mn trop élevée peut être pénalisante pour la souplesse de la couche étanche aux gaz. Ainsi, on a constaté qu'une valeur comprise dans un domaine de 50 000 à 300 000 g/mol était particulièrement bien adaptée, notamment à une utilisation du copolymère à blocs dans une composition pour un bandage pneumatique.

La valeur de l'indice de polydispersité Ip (rappel : Ip = Mw/Mn avec Mw masse moléculaire moyenne en poids) du copolymère à blocs est de préférence inférieure à 3 ; plus préférentiellement inférieure à 2 et encore plus préférentiellement inférieure à 1,5.

Selon l'invention, le bloc « polyisobutylène » du copolymère à blocs est composé majoritairement d'unités issues d'isobutène. Par majoritairement, on entend un taux pondéral en monomère par rapport au poids total du bloc « polyisobutylène » le plus élevé, et de préférence un taux pondéral de plus de 50%, plus préférentiellement de plus de 75% et encore plus préférentiellement de plus de 85%.

Selon l'invention, le bloc « polyisobutylène » du copolymère à blocs présente une masse moléculaire moyenne en nombre ("Mn") allant de 25 000 g/mol à 350 000g/mol, de préférence 35 000 g/mol à 250 000 g/mol de manière à conférer au TPE de bonnes propriétés élastomériques et une tenue mécanique suffisante et compatible avec l'application gomme interne d'un bandage pneumatique.

Selon l'invention, le bloc « polyisobutylène » du copolymère à blocs présente en outre une température de transition vitreuse ("Tg") inférieure ou égale à à - 20°C, plus préférentiellement inférieure à - 40°C. Une valeur de Tg supérieure à ces minima peut diminuer les performances de la couche étanche lors d'une utilisation à très basse température ; pour une telle utilisation, la Tg du copolymère à bloc est plus préférentiellement encore inférieure à - 50°C.

Avantageusement selon l'invention, le bloc « polyisobutylène » du copolymère à blocs peut également comprendre un taux d'un ou de plusieurs diènes conjugués insérés dans la chaîne polymérique. Le taux d'unités issues de diènes est défini par les propriétés d'étanchéité que doit présenter le copolymère à blocs. A titre préférentiel, le taux d'unités issues de diènes va de 0,5 et 16% en poids par rapport au poids du bloc « polyisobutylène », plus préférentiellement de 1 à 10% en poids et encore plus préférentiellement de 2 à 8% en poids par rapport au poids du bloc « polyisobutylène ».

Les diènes conjugués pouvant être copolymérisés avec l'isobutylène pour constituer le bloc « polyisobutylène » sont des diènes conjugués en C₄-C₁₄. De préférence, ces diènes conjugués sont choisis parmi l'isoprène, le butadiène, le pipérylène, le 1-méthylbutadiène, le 2- méthylbutadiène, le 2,3-diméthyl-1,3-butadiène, le 2,4-diméthyl-1,3-butadiène, le 1,3-pentadiène, le 2-méthyl-1,3-pentadiène, le 3-méthyl-1,3-pentadiène, le 4-méthyl-1,3-pentadiène, le 2,3-diméthyl-1,3-pentadiène, le 2,5-diméthyl-1,3-pentadiène, le 2-méthyl-1,4-pentadiène, le 1,3-hexadiène, le 2-méthyl-1,3-hexadiène, le 2-méthyl-1,5-hexadiène, le 3-méthyl-1,3-hexadiène, le 4-méthyl-1,3-hexadiène, le 5-méthyl-1,3-hexadiène, le 2,5-diméthyl-1,3-hexadiène, le 2,5-diméthyl-2,4-hexadiène,le 2-neopentyl-1,3-butadiène, le 1,3-cyclopentadiène, le méthylcyclopentadiène, le 2-méthyl-1,6-heptadiène, le 1,3-cyclohexadiène, 1-vinyl-1,3-cyclohexadiène ou leur mélange. Plus préférentiellement le diène conjugué est l'isoprène ou un mélange contenant de l'isoprène.

Le bloc « polyisobutylène », selon un aspect avantageux de l'invention, peut être halogéné et comporter des atomes d'halogène dans sa chaîne. Cette halogénation permet d'augmenter la vitesse de réticulation de la composition comprenant le copolymère à blocs selon l'invention. L'halogénation se fait au moyen de brome ou de chlore, préférentiellement du brome, sur les unités issues de diènes conjugués de la chaîne polymérique du bloc « polyisobutylène ». Seule une partie de ces unités réagit avec l'halogène. Cette partie d'unités issues de diènes conjugués réactive doit néanmoins être telle que le taux d'unités issues de diènes conjugués n'ayant pas réagi avec l'halogène soit d'au moins 0,5% en poids par rapport au poids du bloc « polyisobutylène ».

Selon l'invention, le ou les blocs thermoplastiques ont une Tg supérieure ou égale à 100°C. Selon un aspect préférentiel de l'invention, la Tg du bloc thermoplastique est supérieure ou égale à 130°C, encore plus préférentiellement supérieure ou égale à 150°C, voire même supérieure ou égale à 200°C.

La proportion du ou des blocs thermoplastiques par rapport au copolymère à blocs est déterminée d'une part par les propriétés de thermoplasticité que doit présenter ledit copolymère. Les blocs thermoplastiques ayant une Tg supérieure ou égale à 100°C doivent être présents dans des proportions suffisantes pour préserver le caractère thermoplastique de l'élastomère selon l'invention. Le taux minimum de blocs thermoplastiques ayant une Tg supérieure ou égale à 100°C du copolymère à blocs peut varier en fonction des conditions d'utilisation du copolymère. D'autre part, la capacité du copolymère à blocs à se déformer lors de la conformation du pneu peut également contribuer à déterminer la proportion des blocs thermoplastiques ayant une Tg supérieure ou égale à 100°C.

Par bloc thermoplastique ayant une Tg supérieure ou égale à 100°C doit être entendu, dans la présente description, tout polymère à base d'au moins un monomère polymérisé autre qu'un monomère styrénique ou indénique, dont la température de transition vitreuse est supérieure à 100°C et dont le copolymère à blocs selon l'invention le contenant est synthétisable par l'homme de l'art et présente les caractéristiques définies plus haut.

Par monomère styrénique doit être entendu dans la présente description tout monomère à base de styrène, non substitué comme substitué ; parmi les styrènes substitués peuvent être cités par exemple les méthylstyrènes (par exemple l'o-méthylstyrène, le m-méthylstyrène ou le p-méthylstyrène, l'alpha-méthylstyrène, l'alpha-2-diméthylstyrène, l'alpha-4-diméthylstyrène ou le diphényléthylène,), le para-tertio-butylstyrène, les chlorostyrènes (par exemple l'o-chlorostyrène, le m-chlorostyrène, le p-chlorostyrène, le 2,4-dichlorostyrène, le 2,6-dichlorostyrène ou le 2,4,6-trichlorostyrène), les bromostyrènes (par exemple l'o-bromostyrène, le m-bromostyrène, le p-bromostyrène, le 2,4-dibromostyrène, le 2,6-dibromostyrène ou les 2,4,6-tribromostyrène), les fluorostyrènes (par exemple l'o-fluorostyrène, le m-fluorostyrène, le p-fluorostyrène, le 2,4-difluorostyrène, le 2,6-difluorostyrène ou les 2,4,6-trifluorostyrène) ou encore le para-hydroxy-styrène.

Par monomère indénique doit être entendu dans la présente description tout monomère à base d'indène, non substitué comme substitué ; parmi les indènes substitués peuvent être cités par exemple les alkyl indènes, les aryl indènes.

Par monomère polymérisé autre qu'un monomère styrénique ou indénique doit être entendu dans la présente description, tout monomère, autre qu'un monomère styrénique ou indénique, polymérisé par l'homme de l'art selon des techniques connues et pouvant conduire à la préparation de copolymères à blocs comprenant un bloc « polyisobutylène » selon l'invention.

A titre d'exemple illustratif mais non limitatif, les monomères polymérisés autres que des monomères styréniques ou indénique selon l'invention et pouvant être utilisés pour la préparation de blocs thermoplastiques ayant une Tg supérieure ou égale à 100°C peuvent être choisis parmi les composés suivants et leurs mélanges:
- l'acénapthylène. L'homme de l'art pourra par exemple se référer à l'article de Z. Fodor et J.P. Kennedy, Polymer Bulletin 1992 29(6) 697-705 ;
- l'isoprène, conduisant alors à la formation d'un certain nombre d'unités polyisoprène 1,4-trans et d'unités cyclisées selon un processus intramoléculaire. L'homme de l'art pourra par exemple se référer aux documents G. Kaszas, J.E. Puskas, .P. Kennedy Applied Polymer Science (1990) 39(1) 119-144 et J.E. Puskas, G. Kaszas, J.P. Kennedy, Macromolecular Science, Chemistry A28 (1991) 65-80.
- les esters de l'acide acrylique, les esters de l'acide acrylique, de l'acide crotonique, de l'acide sorbique, de l'acide méthacrylique, les dérivés de l'acrylamide, les dérivés du méthacrylamide, les dérivés de l'acrylonitrile, les dérivés du méthacrylonitrile et leurs mélanges. On peut citer plus particulièrement, l'acrylate d'adamantyle, le crotonate d'adamantyle, le sorbate d'adamantyle, l'acrylate de 4-biphenylyle, l'acrylate de tertio-butyle, l'acrylate de cyanométhyle, l'acrylate de 2-cyanoéthyle, l'acrylate de 2-cyanobutyle, l'acrylate de 2-cyanohexyle, l'acrylate de 2-cyanoheptyle, l'acrylate de 3,5-dimethyladamantyle, le crotonate de 3,5-dimethyladamantyle, l'acrylate d'isobornyle, l'acrylate de pentachlorobenzyle, l'acrylate de pentaflurobenzyle, l'acrylate de pentachlorophenyle, l'acrylate de pentafluorophenyle, le méthacrylate d'adamantyle, le méthacrylate de 4-tert-butylcyclohexyle, le méthacrylate de tert-butyle, le méthacrylate de 4-tert-butylphényle, le méthacrylate de 4-cyanophényle, le méthacrylate de 4-cyanométhylphényle, le méthacrylate de cyclohexyle, le méthacrylate de 3,5-diméthyladamantyle, le méthacrylate de diméthylaminoéthyle, le méthacrylate de 3,3-diméthylbutyle, l'acide méthacrylique, le méthacrylate de méthyle, le méthacrylate d'éthyle, le méthacrylate de phényle, le méthacrylate d'iso-bornyle, le méthacrylate de tétradécyle, le méthacrylate de triméthylsilyle, le méthacrylate de 2,3-xylériyle, le méthacrylate de 2,6-xylényle, l'acrylamide, le N-sec-butylacrylamide, le N-tert-butylacrylamide, le N,N-diisopropylacrylamide, le N-lméthylbutylacrylamide, le N-méthyl-N-phenylacrylamide, le morpholylacrylamide, le piperidylacrylamide, le N-tert-butylméthacrylamide, le 4-butoxycarbonylphenylméthacrylamide, le 4-carboxyphenylméthacrylamide, le 4-méthoxycarbonylphénylméthacrylamide, le 4-éthoxycarbonylphénylméthacrylamide, le cyanoacrylate de butyle, le chloroacrylate de méthyle, le chloroacrylate d'éthyle, le chloroacrylate d'isopropyle, le chloroacrylate d'isobutyle, le chloroacrylate de cyclohexyle, le fluorométhacrylate de méthyle, le phénylacrylate de méthyle, l'acrylonitrile, le méthacrylonitrile, et leurs mélanges.

Selon une variante de l'invention, le monomère polymérisé autre qu'un monomère styrénique ou indénique peut être copolymérisé avec au moins un autre monomère de manière à former un bloc thermoplastique ayant une Tg supérieure ou égale à 100°C. Selon cet aspect, la fraction molaire en monomère polymérisé autre qu'un monomère styrénique ou indénique, par rapport au nombre total de motifs du bloc thermoplastique, doit être suffisante pour atteindre une Tg supérieure ou égale à 100°C, préférentiellement supérieure ou égale à 130°C, encore plus préférentiellement supérieure ou égale à 150°C, voire même supérieure ou égale à 200°C. Avantageusement la fraction molaire de cet autre co-monomère peut aller de 0 à 90%, plus préférentiellement de 0 à 75% et encore plus préférentiellement de 0 à 50%.

A titre d'illustration, cet autre monomère susceptible de copolymériser avec le monomère polymérisé autre qu'un monomère styrénique ou indénique, peut être choisi parmi les monomères diènes, plus particulièrement, les monomères diènes conjugués ayant 4 à 14 atomes de carbone, les monomères de type vinylaromatiques ayant de 8 à 20 atomes de carbone et les monomères indéniques.

Lorsque le co-monomère est un diène conjugué ayant 4 à 12 atomes de carbone, il représente avantageusement une fraction molaire par rapport au nombre total de motifs du bloc thermoplastique allant de 0 à 25%. A titre de diènes conjugués utilisables dans les blocs thermoplastiques selon l'invention conviennent ceux décrit plus haut, à savoir l'isoprène, le butadiène, le 1-méthylbutadiène, le 2- méthylbutadiène, le 2,3-diméthyl-1,3-butadiène, le 2,4-diméthyl-1,3-butadiène, le 1,3-pentadiène, le 2-méthyl-1,3-pentadiène, le 3-méthyl-1,3-pentadiène, le 4-méthyl-1,3-pentadiène, le 2,3-diméthyl-1,3-pentadiène, le 2,5-diméthyl-1,3-pentadiène, le 1,3-hexadiène, le 2-méthyl-1,3-hexadiène, le 3-méthyl-1,3-hexadiène, le 4-méthyl-1,3-hexadiène, le 5-méthyl-1,3-hexadiène, le 2,5-diméthyl-1,3-hexadiène, le 2-neopentylbutadiène, le 1,3-cyclopentadiène, le 1,3-cyclohexadiène, 1-vinyl-1,3-cyclohexadiène ou leur mélange.

Lorsque le co-monomère est de type vinylaromatique, il représente avantageusement une fraction en motifs sur le nombre total de motifs du bloc thermoplastique de 0 à 90%, préférentiellement allant de 0 à 75% et encore plus préférentiellement allant de 0 à 50%. A titre de composés vinylaromatiques conviennent notamment les monomères styréniques cités plus haut, à savoir les méthylstyrènes, le para-tertio-butylstyrène, les chlorostyrènes, les bromostyrènes, les fluorostyrènes ou encore le para-hydroxy-styrène. De préférence, le co-monomère de type vinylaromatique est le styrène.

On peut citer à titre d'exemples illustratifs mais non limitatifs, des mélanges de co-monomères et pouvant être utilisés pour la préparation de blocs thermoplastiques ayant une Tg supérieure ou égale à 100°C, constitués d'indène et de dérivés du styrène, notamment le para-méthylstyrène ou le para-tertiobutyle styrène. L'homme de l'art pourra alors se référer aux documents J.E. Puskas, G. Kaszas, J.P. Kennedy, W.G. Hager, Journal of Polymer Science part A : Polymer Chemistry 1992 30, 41 ou J.P. Kennedy, S. Midha, Y. Tsungae, Macromolecules (1993) 26, 429.

Lorsque le co-monomère est de type indénique, il représente avantageusement une fraction en motifs sur le nombre total de motifs du bloc thermoplastique de 0 à 90%, préférentiellement allant de 0 à 75% et encore plus préférentiellement allant de 0 à 50%. A titre de monomère indénique, on peut citer l'indène et ses dérivés tels que par exemple le 2-méthylindène, le 3-méthylindène, le 4-méthylindène, les diméthyl-indène, le 2-phénylindène, le 3-phénylindène et le 4-phénylindène. L'homme de l'art pourra par exemple se référer au document de brevet US4946899, par les inventeurs Kennedy, Puskas, Kaszas et Hager et aux documents J. E. Puskas, G. Kaszas, J.P. Kennedy, W.G. Hager Journal of Polymer Science Part A : Polymer Chemistry (1992) 30, 41 et J.P. Kennedy, N. Meguriya, B. Keszler, Macromolecules (1991) 24(25), 6572-6577.

Les copolymères élastomériques thermoplastiques à blocs selon l'invention peuvent être préparés par des procédés de synthèse connus en soi et décrits dans la littérature, notamment celle citée dans la présentation de l'état de la technique de la présente description. L'homme de l'art saura choisir les conditions de polymérisation adéquates et réguler les différents paramètres des procédés de polymérisation afin d'aboutir aux caractéristiques spécifiques de structure du copolymère à blocs de l'invention.

Plusieurs stratégies de synthèse peuvent être mises en oeuvre en vue de préparer les copolymères selon l'invention.

Une première consiste en une première étape de synthèse du bloc « polyisobutylène » par polymérisation cationique vivante des monomères à polymériser au moyen d'un amorceur mono-fonctionnel, di-fonctionnel ou polyfonctionnel connu de l'homme de l'art, suivie de la seconde étape de synthèse du ou des blocs thermoplastiques ayant une Tg supérieure ou égale à 100°C et par ajout du monomère à polymériser sur le polyisobutylène vivant obtenu dans la première étape. Ainsi, ces deux étapes sont consécutives, ce qui se traduit par l'ajout séquencé :
- des monomères à polymériser pour la préparation du bloc « polyisobutylène » ;
- des monomères à polymériser pour la préparation du ou des blocs thermoplastiques ayant une Tg supérieure ou égale à 100°C.

A chaque étape, le ou les monomères à polymériser peuvent ou non être ajoutés sous la forme d'une solution dans un solvant tel que décrit ci-après, en présence ou non d'un acide ou d'une base de Lewis tels que décrits ci-après.

Chacune de ces étapes peut être réalisée dans un même réacteur ou dans deux réacteurs de polymérisation différents. A titre préférentiel, ces deux étapes sont réalisées dans un seul et unique réacteur (synthèse en « one-pot »).

La polymérisation cationique vivante s'effectue classiquement en moyen d'un amorceur di-fonctionnel ou polyfonctionnel et éventuellement d'un acide de Lewis jouant le rôle de co-amorceur afin de former in situ un carbocation. Habituellement, sont ajoutés des composés électro-donneurs afin de conférer à la polymérisation un caractère vivant.

A titre d'illustration, les amorceurs di-fonctionnels ou polyfonctionnels utilisables pour la préparation des copolymères selon l'invention peuvent être choisis parmi le 1,4-di(2-méthoxy-2-propyl)-benzène (ou « dicumylméthyl éther »), le 1,3,5-tri(2-méthoxy-2-propyl)-benzène (ou « tricumylméthyléther »), le 1,4-di(2-chloro-2-propyl)-benzène (ou « dicumyl chloride»), le 1,3,5-tri(2-chloro-2-propyl)-benzène (ou « tricumyl chloride), le 1,4-di(2-hydroxy-2-propyl)-benzène, le 1,3,5-tri(2-hydroxy-2-propyl)-benzène, le 1,4-di(2-acetoxy-2-propyl)-benzène, le 1,3,5-tri(2-acetoxy-2-propyl)-benzène, le 2,6-dichloro-2,4,4,6-tetraméthylheptane, le 2,6-dihydroxy-2,4,4,6-heptane. A titre préférentiel, sont utilisés les dicumyl éthers, les tricumyl éthers, les halogénures de dicumyle ou les halogénures de tricumyle.

Les acides de Lewis peuvent être choisis parmi les halogénures de métaux, de formule générale MXn où M est un élément choisi parmi Ti, Zr, Al, Sn, P, B, X est un halogène tel que Cl, Br, F ou I et n correspondant au degré d'oxydation de l'élément M. On citera par exemple TiCl4, AlCl3, BCl3, BF3, SnCl4, PCl3, PCl5,. Parmi ces composés TiCl4, AlCl3 et BCl3 sont utilisés à titre préférentiel, et TiCl4 à titre encore plus préférentiel.

Les composés électro-donneurs peuvent être choisis parmi les bases de Lewis connues, tels que les pyridines, les amines, les amides, les esters, les sulfoxydes et autres. Parmi eux sont préférés le DMSO (diméthylsulfoxyde) et le DMAc (diméthylacétamide).

La polymérisation cationique vivante s'effectue dans un solvant inerte apolaire ou dans un mélange de solvants inertes apolaire et polaire.

Les solvants apolaires pouvant être utilisés pour la synthèse des copolymères selon l'invention sont par exemple les solvants hydrocarbonés, aliphatiques, cycloaliphatiques ou aromatiques, tels que l'hexane, l'heptane, le cyclohexane, le méthylcyclohexane, le benzène ou le toluène.

Les solvants polaires pouvant être utilisés pour la synthèse des copolymères selon l'invention sont par exemple les solvants halogénés tels que les halogénures d'alcane, comme le chlorure de méthyle (ou chloroforme), le chlorure d'éthyle, le chlorure de butyle, le chlorure de méthylène (ou dichlorométhane) ou les chlorobenzènes (mono-, di- ou tri-chloro).

L'homme de l'art saura choisir la composition des mélanges de monomères à utiliser en vue de préparer les copolymères élastomériques thermoplastiques à blocs selon l'invention ainsi que les conditions de température adéquates en vue d'atteindre les caractéristiques de masses molaires de ces copolymères.

A titre d'exemple illustratif mais non limitatif, et afin de mettre en oeuvre cette première stratégie de synthèse, l'homme de l'art pourra se référer aux documents suivants pour la synthèse de copolymères à blocs à base d'isobutylène et de :
- acénaphtylène : l'article de Z. Fodor et J.P. Kennedy, Polymer Bulletin 1992 29(6) 697-705 ;
- indène : le document de brevet US4946899 par les inventeurs Kennedy, Puskas, Kaszas et Hager et aux documents J. E. Puskas, G. Kaszas, J.P. Kennedy, W.G. Hager Journal of Polymer Science Part A : Polymer Chemistry (1992) 30, 41 et J.P. Kennedy, N. Meguriya, B. Keszler, Macromolecules (1991) 24(25), 6572-6577
- isoprène : les documents G. Kaszas, J.E. Puskas, .P. Kennedy Applied Polymer Science (1990) 39(1) 119-144 et J.E. Puskas, G. Kaszas,J.P. Kennedy, Macromolecular Science, Chemistry A28 (1991) 65-80.

Une deuxième stratégie de synthèse consiste à préparer séparément :
- un bloc « polyisobutylène » téléchélique ou fonctionnel à une ou plusieurs de ses extrémités de chaînes par polymérisation cationique vivante au moyen d'un amorceur mono-fonctionnel, di-fonctionnel ou poly-fonctionnel, suivie éventuellement d'une réaction de fonctionnalisation sur une ou plusieurs extrémités de chaînes,
- le ou les blocs thermoplastiques ayant une Tg supérieure ou égale à 100°C vivants par exemple par polymérisation anionique,
- puis à faire réagir l'un et l'autre pour l'obtention d'un copolymère à blocs selon l'invention. La nature des fonctions réactives à au moins une des extrémités de chaînes du bloc « polyisobutylène » et la proportion de chaînes vivantes du polymère constituant le bloc thermoplastique ayant une Tg supérieure ou égale à 100°C, par rapport à la quantité de ces fonctions réactives seront choisies par l'homme de l'art pour l'obtention d'un copolymère à blocs selon l'invention.

Une troisième stratégie de synthèse consiste à réaliser dans cet ordre:
- la synthèse d'un bloc « polyisobutylène » téléchélique ou fonctionnel à une ou plusieurs de ses extrémités de chaînes par polymérisation cationique vivante au moyen d'un amorceur mono-fonctionnel, di-fonctionnel ou polyfonctionnel ;
- la modification en bout de chaîne de ce « polyisobutylène » de manière à introduire une unité monomère pouvant être lithiée ;
- éventuellement, l'ajout supplémentaire d'une unité monomère pouvant être lithiée et conduire à une espèce capable d'initier une polymérisation anionique, tel que par exemple le 1,1-diphenyléthylène ;
- enfin, l'ajout du monomère polymérisable et d'éventuels co-monomères par voie anionique.

A titre d'exemple pour la mise en oeuvre d'une telle stratégie de synthèse, l'homme de l'art pourra se référer à la communication de Kennedy et Price, ACS Symposium, 1992, 496, 258-277 ou à l'article de Faust et al. : Facile synthesis of diphenylethylene end-functional polyisobutylene and its applications for the synthesis of block copolymers containing poly(methacrylate)s, par Dingsong Feng, Tomoya Higashihara and Rudolf Faust, Polymer, 2007, 49(2), 386-393).

L'halogénation du copolymère selon l'invention est réalisée selon toute méthode connue de l'homme de l'art, notamment celles utilisées pour l'halogénation du caoutchouc butyl et peut se faire par exemple au moyen de brome ou de chlore, préférentiellement du brome, sur les unités issues de diènes conjugués de la chaîne polymérique du bloc « polyisobutylène » et/ou du ou des blocs thermoplastiques.

Dans certaines variantes de l'invention selon lesquelles l'élastomère thermoplastique est étoilé ou encore branché, les procédés décrits par exemple dans les articles de Puskas J. Polym. Sci Part A : Polymer Chemistry, vol 36, pp85-82 (1998) et Puskas, J Polym. Sci Part A : Polymer Chemistry, vol 43, pp1811-1826 (2005) peuvent être mis en oeuvre par analogie pour obtenir des blocs « polyisobutylène » étoilés, branchés ou dendrimères vivants. L'homme du métier saura alors choisir la composition des mélanges de monomères à utiliser en vue de préparer les copolymères selon l'invention ainsi que les conditions de température adéquates en vue d'atteindre les caractéristiques de masses molaires de ces copolymères.

A titre préférentiel, la préparation des copolymères selon l'invention sera réalisée par polymérisation cationique vivante au moyen d'un amorceur difonctionnel ou polyfonctionnel et par ajouts séquencés des monomères à polymériser pour la synthèse du bloc «polyisobutène» et des monomères à polymériser pour la synthèse du ou des blocs thermoplastiques ayant une Tg supérieure ou égale à 100°C .

L'élastomère à blocs selon l'invention peut constituer à lui seul la composition élastomère ou bien être associé, dans cette composition, à d'autres constituants pour former une matrice élastomérique.

Si d'éventuels autres élastomères sont utilisés dans cette composition, le copolymère élastomérique thermoplastique à blocs selon l'invention constitue l'élastomère majoritaire en poids, c'est-à-dire que la fraction pondérale du copolymère à blocs par rapport à l'ensemble des élastomères est la plus élevée. Le copolymère à blocs représente de préférence plus de 50%, plus préférentiellement plus de 70% en poids de l'ensemble des élastomères. De tels élastomères complémentaires pourraient être par exemple des élastomères diéniques ou des élastomères thermoplastiques styréniques (TPS), dans la limite de la compatibilité de leurs microstructures.

A titre d'élastomères diéniques utilisables en complément de l'élastomère thermoplastique à blocs précédemment décrit peuvent être cités notamment les polybutadiènes (BR), les polyisoprènes de synthèse (IR), le caoutchouc naturel (NR), les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR), les copolymères isoprène-isobutylène (IIR), les copolymères d'isoprène-butadiène-styrène (SBIR) et les mélanges de tels copolymères.

A titre d'élastomère TPS utilisable en complément de l'élastomère thermoplastique à blocs précédemment décrit peut être cité notamment un élastomère TPS choisi dans le groupe constitué par les copolymères blocs styrène/ butadiène/ styrène, les copolymères blocs styrène/ isoprène/ styrène, styrène/ butylène/ styrène, les copolymères blocs styrène/ isoprène/ butadiène/ styrène, les copolymères blocs styrène/ éthylène/ butylène/ styrène, les copolymères blocs styrène/ éthylène/ propylène/ styrène, les copolymères blocs styrène/ éthylène/ éthylène/ propylène/ styrène et les mélanges de ces copolymères. Plus préférentiellement, ledit élastomère TPS complémentaire éventuel est choisi dans le groupe constitué par les copolymères blocs styrène/ éthylène/ butylène/ styrène, les copolymères blocs styrène/ éthylène/ propylène/ styrène et les mélanges de ces copolymères.

Le copolymère à blocs précédemment décrit est suffisant à lui seul pour que soit remplie la fonction d'étanchéité aux gaz vis-à-vis des objets pneumatiques dans lesquels il peut être utilisé.

Toutefois, selon un mode de réalisation préférentiel de l'invention, ce dernier est utilisé dans une composition qui comporte également, à titre d'agent plastifiant, une huile d'extension (ou huile plastifiante) dont la fonction est de faciliter la mise en oeuvre, particulièrement l'intégration dans l'objet pneumatique par un abaissement du module et une augmentation du pouvoir tackifiant de la couche étanche aux gaz.

On peut utiliser toute huile d'extension, de préférence à caractère faiblement polaire, apte à étendre, plastifier des élastomères, notamment thermoplastiques. A température ambiante (23°C), ces huiles, plus ou moins visqueuses, sont des liquides (c'est-à-dire, pour rappel, des substances ayant la capacité de prendre à terme la forme de leur contenant), par opposition notamment à des résines ou des caoutchoucs qui sont par nature solides.

De préférence, l'huile d'extension est choisie dans le groupe constitué par les huiles polyoléfiniques (c'est-à-dire issues de la polymérisation d'oléfines, monooléfines ou dioléfines), les huiles paraffiniques, les huiles naphténiques (à basse ou haute viscosité), les huiles aromatiques, les huiles minérales, et les mélanges de ces huiles.

Il est à noter que l'ajout d'une huile d'extension au SIBS entraîne une perte d'étanchéité de ce dernier, variable selon le type et la quantité d'huile utilisée. On utilise préférentiellement une huile du type polybutène, en particulier une huile polyisobutylène (en abrégé "PIB"), qui a démontré le meilleur compromis de propriétés comparativement aux autres huiles testées, notamment à une huile conventionnelle du type paraffinique.

A titre d'exemples, des huiles polyisobutylène sont commercialisées notamment par la société UNIVAR sous la dénomination "Dynapak Poly" (e.g. "Dynapak Poly 190"), par INEOS Oligomer sous la dénomination "INDOPOL H1200", par BASF sous les dénominations "Glissopal" (e.g. "Glissopal 1000") ou "Oppanol" (e.g. "Oppanol B12"); des huiles paraffiniques sont commercialisées par exemple par EXXON sous la dénomination "Telura 618" ou par Repsol sous la dénomination "Extensol 51".

La masse moléculaire moyenne en nombre (Mn) de l'huile d'extension est préférentiellement comprise entre 200 et 25 000 g/mol, plus préférentiellement encore comprise entre 300 et 10 000 g/mol. Pour des masses Mn trop basses, il existe un risque de migration de l'huile à l'extérieur de la composition, tandis que des masses trop élevées peuvent entraîner une rigidification excessive de cette composition. Une masse Mn comprise entre 350 et 4 000 g/mol, en particulier entre 400 et 3 000 g/mol, s'est avérée constituer un excellent compromis pour les applications visées, en particulier pour une utilisation dans un bandage pneumatique.

L'homme de l'art saura ajuster la quantité d'huile d'extension en fonction des conditions particulières d'usage de la composition.

On préfère que le taux d'huile d'extension soit supérieur à 5 pce, de préférence compris entre 5 et 100 pce (parties en poids pour cent parties d'élastomère total, c'est-à-dire l'élastomère thermoplastique plus tout autre élastomère éventuel présent dans la composition ou couche élastomère).

En dessous du minimum indiqué, la composition élastomère risque de présenter une rigidité trop forte pour certaines applications tandis qu'au-delà du maximum préconisé, on s'expose à un risque de cohésion insuffisante de la composition et de perte d'étanchéité pouvant être néfaste selon l'application considérée.

Pour ces raisons, en particulier pour une utilisation de la composition étanche dans un bandage pneumatique, on préfère que le taux d'huile d'extension soit supérieur à 10 pce, notamment compris entre 10 et 90 pce, plus préférentiellement encore qu'il soit supérieur à 20 pce, notamment compris entre 20 et 80 pce.

La composition décrite ci-dessus peut comporter par ailleurs les divers additifs usuellement présents dans les couches étanches à l'air connues de l'homme de l'art. On citera par exemple des charges renforçantes, telles que du noir de carbone ou de la silice, des charges non renforçantes ou inertes, des agents colorants avantageusement utilisables pour la coloration de la composition, des charges lamellaires améliorant encore l'étanchéité (e.g. phyllosilicates tels que kaolin, talc, mica, graphite, argiles ou argiles modifiées ("organo clays"), des plastifiants autres que les huiles d'extension précitées, des agents de protection tels que antioxydants ou antiozonants, anti-UV, divers agents de mise en oeuvre ou autres stabilisants, un système de réticulation par exemple à base soit de soufre et/ou de peroxyde et/ou de bismaléimides ou tout autre moyen permettant la réticulation des chaînes, ou encore des promoteurs aptes à favoriser l'adhésion au reste de la structure de l'objet pneumatique.

L'élastomère à blocs selon l'invention présente l'avantage, en raison de sa nature thermoplastique, de pouvoir être travaillé tel quel à l'état fondu (liquide), et par conséquent d'offrir une possibilité de mise en oeuvre simplifiée de la composition élastomère le contenant.

D'autre part, l'élastomère à blocs, malgré sa nature thermoplastique, confère à la composition qui le contient une bonne cohésion du matériau à chaud, notamment à des températures allant de 100°C à 200°C.

En outre, la composition selon l'invention comprenant l'élastomère thermoplastique à blocs présente des propriétés hystérétiques améliorées en comparaison avec une composition à base de caoutchouc butyl.

Un autre objet de l'invention est de ce fait un objet pneumatique pourvu d'une couche élastomère étanche aux gaz de gonflage tels que l'air, ladite couche élastomère étant constituée de la composition élastomère comprenant au moins, à titre d'élastomère majoritaire, un élastomère thermoplastique à blocs décrit plus haut.

Outre les élastomères (thermoplastiques et autres élastomères éventuels) précédemment décrits, la composition étanche aux gaz pourrait aussi comporter, toujours selon une fraction pondérale minoritaire par rapport à l'élastomère thermoplastique à blocs, des polymères autres que des élastomères, tels que par exemple des polymères thermoplastiques compatibles avec l'élastomère thermoplastique à blocs.

La couche ou composition étanche aux gaz précédemment décrite est un composé solide (à 23°C) et élastique, qui se caractérise notamment, grâce à sa formulation spécifique, par une très haute souplesse et très haute déformabilité.

La couche ou composition à base d'un élastomère thermoplastique à blocs précédemment décrite est utilisable comme couche étanche à l'air dans tout type d'objet pneumatique. A titre d'exemples de tels objets pneumatiques, on peut citer les bateaux pneumatiques, les ballons ou balles utilisées pour le jeu ou le sport.

Elle est particulièrement bien adaptée à une utilisation comme couche étanche à l'air (ou tout autre gaz de gonflage, par exemple azote) dans un objet pneumatique, produit fini ou semi-fini, en caoutchouc, tout particulièrement dans un bandage pneumatique pour véhicule automobile tel qu'un véhicule de type deux roues, tourisme ou industriel.

Une telle couche étanche à l'air est préférentiellement disposée sur la paroi interne de l'objet pneumatique, mais elle peut être également intégrée complètement à sa structure interne.

L'épaisseur de la couche étanche à l'air est préférentiellement supérieure à 0,05 mm, plus préférentiellement comprise entre 0,1 mm et 10 mm (notamment entre 0,1 et 1,0 mm).

On comprendra aisément que, selon les domaines d'application spécifiques, les dimensions et les pressions en jeu, le mode de mise en oeuvre de l'invention peut varier, la couche étanche à l'air comportant alors plusieurs gammes d'épaisseur préférentielles.

Comparativement à une couche étanche à l'air usuelle à base de caoutchouc butyl, la composition étanche à l'air décrite ci-dessus a l'avantage de présenter une hystérèse nettement plus faible, et présage donc d'offrir une résistance au roulement réduite aux bandages pneumatiques.

En outre, cet élastomère thermoplastique à blocs et ayant une Tg supérieure ou égale à 100°C, malgré sa nature thermoplastique, confère à la composition étanche à l'air qui le contient une bonne cohésion à chaud du matériau, notamment à des températures allant de 100°C à 200°C. Ces températures correspondent aux températures cuisson de bandages pneumatiques. Cette cohésion à haute température permet un démoulage à chaud de ces pneumatiques sans altérer l'intégrité de la composition étanche contenant ledit élastomère thermoplastique à blocs. Cette cohésion à haute température permet également une utilisation des pneumatiques dans des conditions extrêmes qui peut induire des hausses de température significatives au sein de la gomme intérieure.

La couche élastomère étanche aux gaz précédemment décrite est avantageusement utilisable dans les bandages pneumatiques de tous types de véhicules, en particulier véhicules tourisme ou véhicules industriels tels que Poids-lourd.

A titre d'exemple, la figure unique annexée représente de manière très schématique (sans respect d'une échelle spécifique), une coupe radiale d'un bandage pneumatique conforme à l'invention.

Ce bandage pneumatique 1 comporte un sommet 2 renforcé par une armature de sommet ou ceinture 6, deux flancs 3 et deux bourrelets 4, chacun de ces bourrelets 4 étant renforcé avec une tringle 5. Le sommet 2 est surmonté d'une bande de roulement non représentée sur cette figure schématique. Une armature de carcasse 7 est enroulée autour des deux tringles 5 dans chaque bourrelet 4, le retournement 8 de cette armature 7 étant par exemple disposé vers l'extérieur du pneumatique 1 qui est ici représenté monté sur sa jante 9. L'armature de carcasse 7 est de manière connue en soi constituée d'au moins une nappe renforcée par des câbles dits "radicaux", par exemple textiles ou métalliques, c'est-à-dire que ces câbles sont disposés pratiquement parallèles les uns aux autres et s'étendent d'un bourrelet à l'autre de manière à former un angle compris entre 80° et 90° avec le plan circonférentiel médian (plan perpendiculaire à l'axe de rotation du pneumatique qui est situé à mi-distance des deux bourrelets 4 et passe par le milieu de l'armature de sommet 6).

La paroi interne du bandage pneumatique 1 comporte une couche 10 étanche à l'air, par exemple d'épaisseur égale à environ 0,9 mm, du côté de la cavité interne 11 du bandage pneumatique 1.

Cette couche interne (ou "inner liner") couvre toute la paroi interne du bandage pneumatique, se prolongeant d'un flanc à l'autre, au moins jusqu'au niveau du crochet de jante lorsque le bandage pneumatique est en position montée. Elle définit la face radialement interne dudit bandage destinée à protéger l'armature de carcasse de la diffusion d'air provenant de l'espace 11 intérieur au bandage. Elle permet le gonflement et le maintien sous pression du bandage pneumatique; ses propriétés d'étanchéité doivent lui permettre de garantir un taux de perte de pression relativement faible, de maintenir le bandage gonflé, en état de fonctionnement normal, pendant une durée suffisante, normalement de plusieurs semaines ou plusieurs mois.

Contrairement à un bandage pneumatique conventionnel utilisant une composition à base de caoutchouc butyl, le bandage pneumatique conforme à l'invention utilise dans cet exemple, comme couche 10 étanche à l'air, une composition à base d'un élastomère thermoplastique à blocs tel que décrit plus haut dont le ou les blocs thermoplastiques présentent une Tg supérieure ou égale à 100°C .

Le pneumatique pourvu de sa couche étanche à l'air 10 tel que décrit ci-dessus peut être réalisé avant ou après vulcanisation (ou cuisson).

Dans le premier cas (i.e., avant cuisson du bandage pneumatique), la couche étanche à l'air est simplement appliquée de façon conventionnelle à l'endroit souhaité, pour formation de la couche 10. La vulcanisation est ensuite effectuée classiquement. Les élastomères thermoplastiques à blocs selon l'invention supportent bien les contraintes liées à l'étape de vulcanisation.

Une variante de fabrication avantageuse, pour l'homme de l'art des bandages pneumatiques, consistera par exemple au cours d'une première étape, à déposer à plat la couche étanche à l'air directement sur un tambour de confection, sous la forme d'une couche ("skim") d'épaisseur adaptée, avant de recouvrir cette dernière avec le reste de la structure du bandage pneumatique, selon des techniques de fabrication bien connues de l'homme de l'art.

Dans le second cas (i.e., après cuisson du bandage pneumatique), la couche étanche est appliquée à l'intérieur du bandage pneumatique cuit par tout moyen approprié, par exemple par collage, par pulvérisation ou encore extrusion et soufflage d'un film d'épaisseur appropriée.

## Revendications

1. Objet pneumatique pourvu d'une couche élastomère étanche aux gaz de gonflage, **caractérisé en ce que** ladite couche élastomère est constituée d'une composition élastomère comportant au moins, à titre d'élastomère majoritaire, un élastomère thermoplastique à blocs comprenant
1) un bloc « polyisobutylène » présentant une masse moléculaire moyenne en nombre allant de 25 000 g/mol à 350 000 g/mol et une température de transition vitreuse inférieure ou égale à -20°C,
2) à au moins l'une des extrémités du bloc « polyisobutylène », un bloc thermoplastique constitué d'au moins un monomère polymérisé autre qu'un monomère styrénique ou indénique dont la température de transition vitreuse est supérieure ou égale à 100°C.

2. Objet pneumatique selon la revendication 1, **caractérisé en ce que** le copolymère présente une structure linéaire tribloc.

3. Objet pneumatique selon la revendication 1, **caractérisé en ce que** le copolymère présente une structure étoilée à au moins 3 branches et au plus 12 branches dans lequel le bloc « polyisobutylène » est étoilé à au moins 3 et au plus 12 branches, chacune étant terminée par un bloc thermoplastique.

4. Objet pneumatique selon la revendication 1, **caractérisé en ce que** le copolymère présente une structure dendrimère dans lequel le bloc « polyisobutylène » est dendrimère, chacune des branches du « polyisobutylène » dendrimère étant terminée par un bloc thermoplastique.

5. Objet pneumatique selon l'une quelconque des revendications 1 à 4, **caractérisé en ce que** le bloc « polyisobutylène » comprend un taux d'unités issues d'un ou de plusieurs diènes conjugués insérées dans la chaîne polymérique allant de 0,5% à 16% en poids par rapport au poids du bloc « polyisobutylène »,

6. Objet pneumatique selon la revendication 5, **caractérisé en ce que** le bloc « polyisobutylène » est halogéné.

7. Objet pneumatique selon l'une quelconque des revendications précédentes, **caractérisé en ce que** la composition élastomère comprend une huile d'extension de l'élastomère.

8. Objet pneumatique selon la revendication 7, **caractérisé en ce que** le taux d'huile d'extension dans la composition élastomère est de 5 à 100 parties en poids pour cent parties d'élastomère total.

9. Composition selon l'une quelconques des revendications 1 à 8, **caractérisé en ce que** la composition élastomère comprend une charge lamellaire.

10. Objet pneumatique l'une quelconques des revendications 1 à 9, **caractérisé en ce que** la couche étanche a une épaisseur comprise entre 0,05 mm et 10 mm.

11. Objet pneumatique selon la revendication 10, **caractérisé en ce que** la couche étanche est disposée sur la paroi interne de l'objet pneumatique.

12. Objet pneumatique selon l'une quelconque des revendications précédentes, **caractérisé en ce que** ledit objet est un bandage pneumatique.

13. Objet pneumatique selon l'une quelconque des revendications 1 à 11, **caractérisé en ce que** ledit objet pneumatique est une chambre à air.

14. Objet pneumatique selon la revendication 13, **caractérisé en ce que** ladite chambre à air est une chambre à air de bandage pneumatique.

15. Procédé pour étanchéifier un objet pneumatique vis-à-vis des gaz de gonflage, dans lequel on incorpore audit objet pneumatique lors de sa fabrication, ou on ajoute audit objet pneumatique après sa fabrication, une couche élastomère étanche aux gaz constituée d'une composition telle que définie dans l'une quelconque des revendications 1 à 9.

## Patentansprüche

1. Pneumatisches Objekt, das mit einer aufpumpgas-dichten Elastomerschicht versehen ist, **dadurch gekennzeichnet, dass** die Elastomerschicht aus einer Elastomerzusammensetzung besteht, die mindestens als überwiegendes Elastomer ein thermoplastisches Blockelastomer, umfassend
1) einen "Polyisobutylen"-Block mit einem zahlenmittleren Molekulargewicht im Bereich von 25.000 g/mol bis 350.000 g/mol und einer Glasübergangstemperatur kleiner gleich -20°C und
2) einen thermoplastischen Block aus mindestens einem polymerisierten Monomer, bei dem es sich nicht um ein Styrol- oder Indenmonomer handelt, an mindestens einem der Enden des "Poly-isobutylen"-Blocks, dessen Glasübergangstempe-ratur größer gleich 100°C ist,
umfasst.

2. Pneumatisches Objekt nach Anspruch 1, **dadurch gekennzeichnet, dass** das Copolymer eine lineare Dreiblockstruktur aufweist.

3. Pneumatisches Objekt nach Anspruch 1, **dadurch gekennzeichnet, dass** das Copolymer eine sternverzweigte Struktur mit mindestens 3 Armen und höchstens 12 Armen aufweist, wobei der "Polyisobutylen"-Block mit mindestens 3 und höchstens 12 Armen sternverzweigt ist, wobei jeder der Arme durch einen thermoplastischen Block terminiert ist.

4. Pneumatisches Objekt nach Anspruch 1, **dadurch gekennzeichnet, dass** das Copolymer eine dendrimere Struktur aufweist, in der der "Polyisobutylen"-Block dendrimer ist, wobei jeder der Arme des dendrimeren "Polyisobutylens" durch einen thermoplastischen Block terminiert ist.

5. Pneumatisches Objekt nach einem der Ansprüche 1 bis 4, **dadurch gekennzeichnet, dass** der "Poly-isobutylen"-Block einen Gehalt an Einheiten, die sich von einem oder mehreren in die Polymerkette insertierten konjugierten Dienen ableiten, von 0,5 bis 16 Gew.-%, bezogen auf das Gewicht des "Poly-isobutylen"-Blocks, aufweist.

6. Pneumatisches Objekt nach Anspruch 5, **dadurch gekennzeichnet, dass** der "Polyisobutylen"-Block halogeniert ist.

7. Pneumatisches Objekt nach einem der vorhergehenden Ansprüche, **dadurch gekennzeichnet, dass** die Elastomerzusammensetzung ein Strecköl für das Elastomer umfasst.

8. Pneumatisches Objekt nach Anspruch 7, wobei der Streckölgehalt in der Elastomerzusammensetzung 5 bis 100 Gewichtsteile pro hundert Teile des gesamten Elastomers beträgt.

9. Zusammensetzung nach einem der Ansprüche 1 bis 8, **dadurch gekennzeichnet, dass** die Elastomerzusammensetzung einen plättchenförmigen Füllstoff umfasst.

10. Pneumatisches Objekt nach einem der Ansprüche 1 bis 9, **dadurch gekennzeichnet, dass** die dichte Schicht eine Dicke zwischen 0,05 mm und 10 mm aufweist.

11. Pneumatisches Objekt nach Anspruch 10, **dadurch gekennzeichnet, dass** die dichte Schicht auf der Innenwand des pneumatischen Objekts angeordnet ist.

12. Pneumatisches Objekt nach einem der vorhergehenden Ansprüche, **dadurch gekennzeichnet, dass** es sich bei dem Objekt um einen Luftreifen handelt.

13. Pneumatisches Objekt nach einem der Ansprüche 1 bis 11, **dadurch gekennzeichnet, dass** es sich bei dem pneumatischen Objekt um einen Luftschlauch handelt.

14. Pneumatisches Objekt nach Anspruch 13, **dadurch gekennzeichnet, dass** es sich bei dem Luftschlauch um einen Luftschlauch für einen Luftreifen handelt.

15. Verfahren zum Abdichten eines pneumatischen Objekts gegenüber den Aufpumpgasen, bei dem man eine gasdichte Elastomerschicht, die aus einer Zusammensetzung gemäß einem der Ansprüche 1 bis 9 besteht, in das pneumatische Objekt bei dessen Herstellung einarbeitet oder zu dem pneumatischen Objekt nach dessen Herstellung hinzufügt.

## Claims

1. Inflatable object equipped with an elastomeric layer that is impermeable to inflation gases, **characterized in that** said elastomeric layer is formed from an elastomeric composition comprising at least, as majority elastomer, one block thermoplastic elastomer comprising
1) a "polyisobutylene" block with a number-average molecular mass ranging from 25 000 g/mol to 350 000 g/mol and a glass transition temperature of less than or equal to -20°C,
2) at at least one of the ends of the "polyisobutylene" block, a thermoplastic block made from at least one polymerized monomer other than a styrene or indene monomer, whose glass transition temperature is greater than or equal to 100°C.

2. Inflatable object according to Claim 1, **characterized in that** the copolymer has a linear triblock structure.

3. Inflatable object according to Claim 1, **characterized in that** the copolymer has a star structure with at least three arms and not more than 12 arms, in which the "polyisobutylene" block is a star block with at least 3 and not more than 12 arms, each ending with a thermoplastic block.

4. Inflatable object according to Claim 1, **characterized in that** the copolymer has a dendrimer structure in which the "polyisobutylene" block is a dendrimer, each of the arms of the dendrimer "polyisobutylene" ending with a thermoplastic block.

5. Inflatable object according to any one of Claims 1 to 4, **characterized in that** the "polyisobutylene" block comprises a content of units derived from one or more conjugated dienes inserted into the polymer chain ranging from 0.5% to 16% by weight relative to the weight of the "polyisobutylene" block.

6. Inflatable object according to Claim 5, **characterized in that** the "polyisobutylene" block is halogenated.

7. Inflatable object according to any one of the preceding claims, **characterized in that** the elastomeric composition comprises an extender oil for the elastomer.

8. Inflatable object according to Claim 7, **characterized in that** the content of extender oil in the elastomeric composition is from 5 to 100 parts by weight per hundred parts of total elastomer.

9. Inflatable object to any one of Claims 1 to 8, **characterized in that** the elastomeric composition comprises a platy filler.

10. Inflatable object according to Claim 9, **characterized in that** the airtight layer has a thickness of between 0.05 mm and 10 mm.

11. Inflatable object according to Claim 10, **characterized in that** the airtight layer is placed on the inner wall of the inflatable object.

12. Inflatable object according to any one of preceding Claims, **characterized in that** said object is a pneumatic tyre.

13. Inflatable object according to any one of Claims 1 to 11, **characterized in that** said inflatable object is an inner tube.

14. Inflatable object according to Claim 13, **characterized in that** said inner tube is a pneumatic tyre inner tube.

15. Process for sealing an inflatable object with respect to inflation gases, in which a gastight elastomeric layer formed from a composition as defined in any one of Claims 1 to 9 is incorporated into said inflatable object during its manufacture, or is added to said inflatable object after its manufacture.
